# FASCICULE DE BREVET EUROPEEN

(11) **EP 1 628 818 B1**
(45) Date de publication et mention de la délivrance du brevet: **20.09.2006**
(21) Numéro de dépôt: 04736058.1
(22) Date de dépôt: 04.06.2004
(51) Int. Cl.: B29C 44/34, B29C 44/22

(54) **PROCEDE POUR LA PRODUCTION CONTINUE DE PROFILES PLEINS, CREUX OU OUVERTS**
VERFAHREN ZUR KONTINUIERLICHEN HERSTELLUNG EINES VOLLEN, HOHLEN ODER OFFENEN PROFILS
METHOD FOR CONTINUOUS PRODUCTION OF SOLID, HOLLOW OR OPEN PROFILES

(30) Priorité: 05.06.2003 EP 03012808
(43) Date de publication de la demande: 01.03.2006
(73) Titulaire: NMC S.A., 4731 Raeren/Eynatten (BE)
(72) Inventeur: NAVEZ, Vincent, B-1348 Louvain-la-Neuve (BE); FRERE, Robert, B-4850 Plombières (BE); MAYERES, Jean-Pierre, B-4700 Eupen (BE); NOEL, Emmanuel, B-4700 Eupen (BE)
(74) Mandataire: Kihn, Pierre Emile Joseph
(86) Numéro de dépôt international: PCT/EP2004/051027
(87) Numéro de publication internationale: WO 2004/108387

(56) Documents cités:
- EP-A- 0 807 510
- WO-A-97/06935
- US-A- 5 538 777
- US-A- 5 753 717
- US-A- 6 132 077
- US-A1- 2002 169 224

## Description

La présente invention concerne un procédé selon la préambule de la revendication 1.

Depuis de nombreuses années, on fabrique des profilés de polystyrène ayant une densité supérieure à 400 kg/m³ pour une utilisation dans la décoration intérieure ou extérieure des habitations. Ces profilés de formes diverses ont un aspect décoratif marqué et sont souvent utilisés pour remplacer ou imiter des décorations de plafonds en stuc. Ils peuvent en outre, grâce à leur densité élevée, supporter des impacts, ce qui autorise leur utilisation au niveau de circulation des personnes et objets mobiles pouvant les entrechoquer. Le polystyrène n'absorbant quasiment pas d'eau, on peut utiliser de tels profils au niveau du sol, comme plinthes.

Afin de pouvoir réaliser des profilés avec des décors complexes de bonne qualité et ayant un aspect de surface acceptable, il est nécessaire que les profilés aient une structure régulière, c'est-à-dire des cellules fines et uniformes. Si les cellules sont irrégulières, des défauts de surface sont visibles et les profilés ne sont pas commercialisables.

Malgré de nombreux efforts, il n'a pas été possible de produire des tels profilés en polystyrène ayant une densité inférieure à 400 kg/m³. En effet, dès que l'on essaye de fabriquer des profilés ayant une densité inférieure à cette valeur, on obtient des structures qui ne sont pas assez régulières pour obtenir des profilés ne présentant pas de défauts de surface gênants.

US 5,753,717 décrit un procédé d'extrusion de mousse de polystyrène à l'aide de CO₂, ayant une résistance mécanique améliorée, obtenue en atteignant une température à la sortie de la filière inférieure à une température critique. Pour réussir à refroidir le mélange polymère + CO₂ en dessous de cette température critique, l'inventeur souligne la nécessité d'injecter conjointement une plus grande proportion d'agent de moussage. La densité baisse en conséquence, le gaz ayant un effet de réduction de la viscosité par plastification, ce qui diminue les frottements visqueux et la chaleur générée par ces frottements. Les produits obtenus décrits sont sous forme de feuilles, destinées à être thermoformées, possédant une taille de cellules particulièrement fine (<25 µm) et une épaisseur de parois cellulaires de 1 à 2 µm. La densité de la mousse est inférieure à 4 lbs/ft³ [64 kg/m³].

US 5,753,717 souligne par ailleurs qu'il n'a pas été possible auparavant d'obtenir des mousses de polystyrène ayant des densités élevées ET une taille de cellules très fines: en diminuant la proportion d'agent gonflant, la densité augmente mais les cellules deviennent épaisses et grosses. US 5,753,717 précise encore que les procédés antérieurs conventionnels ne permettent d'obtenir que des feuilles de mousses ayant des cellules plutôt grandes et épaisses, en travaillant à des températures de filière d'au moins 140°C et jusqu'à 155°C.

US 2002/0169224 décrit un procédé continu de préparation de mousses présentant des tailles de cellules réduites et/ou uniformes en formant un mélange uniforme de polymère et d'agent de moussage, en réduisant la température du mélange à la sortie et à une pression suffisante pour maintenir l'agent de moussage en solution et en passant le mélange ensuite par un orifice de sortie afin de l'expanser. La température d'extrusion est égale ou inférieure à 30 °C au-dessus de la température de transition vitreuse du polymère et la quantité de CO₂ utilisée est d'au moins 4.4 % en poids du polymère. Les tailles des cellules revendiquées se situent entre 2 et 200 µm et les densités entre 100 et 300 kg/m³.

Le but de la présente invention est de proposer un nouveau procédé de fabrication pour des profilés comprenant une mousse de polystyrène ayant une densité comprise entre 200 kg/m³ et 350 kg/m³, ayant des cellules fines, de 25 à 100 µm, et de taille homogène.

Le but est atteint par un procédé de fabrication selon la revendication 1.

Ce procédé permet de réaliser de mousses à base de polystyrène ayant une densité comprise entre 200 kg/m³ et 350 kg/m³ tout en présentant un aspect de surface lisse et sans défauts apparents.

Grâce au contrôle, à l'efficacité et à l'homogénéité du refroidissement mis en oeuvre, le procédé permet d'augmenter la productivité de profilés et la qualité des cellules est bien uniforme.

Des mousses ayant une densité comprise entre 200 kg/m³ et 350 kg/m³, ayant des cellules fines, de 25 à 100 µm, et de taille homogène, peuvent être obtenus, de manière surprenante, par le procédé développé dans le cadre de la présente invention, même avec des températures optimales de moussage supérieures à 135°C.

Dans le cas de la présente invention, étant donné que les densités visées sont beaucoup plus élevées que celles envisagées dans US 5,753,717, l'épaisseur des parois cellulaires sera forcément plus grande. Mais l'obtention de cellules suffisamment fines pour assurer aux mousses de la présente invention une qualité de surface adéquate reste indispensable, et semblait difficile voir irréalisable selon US 5,753,717. L'analyse des causes possibles de ces problèmes nous a menés à considérer non seulement la puissance de refroidissement à mettre en oeuvre, la température à atteindre à la filière mais aussi l'homogénéité de cette température dans une section perpendiculaire à l'écoulement. Plus on désire réaliser des densités élevées, plus la puissance de refroidissement à fournir est grande, mais surtout plus l'écart de température entre le centre du flux et les bords est difficile à réduire. Ceci conduit alors à ce que le centre du flux, trop chaud, aura une viscosité plus faible, offrant moins de résistance à l'expansion des bulles de gaz, augmentant ainsi la taille moyenne des cellules de la mousse, au détriment de son apparence et de sa qualité.

La température optimale à laquelle la mousse atteint la qualité la plus favorable (densité - taille cellulaire) est également cruciale, le système de refroidissement doit pour cela être suffisamment puissant, cependant progressif et bien contrôlé.

Selon un premier mode de réalisation avantageux, le polymère mis en oeuvre est choisi dans le groupe constitué de polystyrène, d'acrylonitrile-butadiène-styrène (ABS), de styrène-butadiène-styrène (SBS), de styrène-ethylène-butadiène-styrène (SEBS) ou de leurs mélanges.

On peut également utiliser plusieurs sortes de polystyrènes, différant en viscosité et donc en masse moléculaire, seuls ou en mélange avec d'autres copolymères de styrène et d'un monomère diène. Des copolymères adéquats sont par exemple l'acrylonitrile-butadiène-styrène (ABS), le styrène-butadiène-styrène (SBS), le styrène-ethylène-butadiène-styrène (SEBS) ou leurs mélanges.

Il est également possible de modifier une partie ou toute la surface du profilé de mousse primaire solidifié en lui adjoignant une couche supplémentaire de matière par coextrusion. Cette matière coextrudée peut être à l'état moussée ou compacte.

Le gaz de moussage préférablement utilisé est le CO₂.

D'autres particularités et caractéristiques de l'invention ressortiront de la description détaillée de quelques modes de réalisation avantageux présentés ci-dessous, à titre d'illustration.

### 1. Procédé de fabrication:

### 1.1. Dosage des composants:

Les composants de la formulation sont dosés individuellement par une station de dosage de type volumétrique ou gravimétrique, pour réaliser précisément la composition voulue. Les matières premières sont de préférence sous forme de granulés réguliers, ayant si possible la même taille et la même forme d'un composant à l'autre. On préfèrera aussi que la densité apparente soit dans une fourchette étroite entre les divers composants, afin de ne pas provoquer un démélange précoce.

### 1.2. Extrudeuse:

Les composants ainsi dosés sont acheminés vers l'alimentation d'une extrudeuse plastificatrice. Cette extrudeuse comporte de préférence deux vis, qui peuvent être co- ou contre-rotatives, auto-nettoyante ou pas. Le cylindre comporte plusieurs zones de chauffage. La première partie du cylindre est chauffée à haute température, afin de plastifier les composants solides dosés à l'alimentation, tout en les malaxant pour homogénéiser le tout. A l'endroit le plus favorable du point de vue de la viscosité et de la pression dans le cylindre, on injecte un gaz sous pression via un port d'injection foré dans le cylindre. Le gaz sera maintenu dans sa phase condensée, en particulier un état supercritique dans le cas du CO₂ (voir point 2.2.). Le mélange des composants et du gaz sont malaxés et pressurisés afin d'obtenir une bonne homogénéité et une dissolution optimale du gaz dans le mélange fondu pour obtenir une seule phase. Les zones du cylindres sont ensuite progressivement plus froide afin de maintenir la pression nécessaire à la solubilisation du gaz.

### 1.3. Refroidissement:

Il peut se faire selon deux dispositions:
i) Échangeur de chaleur "dynamique" par l'emploi d'une configuration de vis longues: la première partie du cylindre ayant servi à la plastification et à l'homogénéisation des composants solides avec le gaz décrite au point b) précédent, la seconde partie de la vis, dont les zones sont refroidies par circulation d'un fluide caloporteur, permet le refroidissement du mélange monophasique. Le design de la vis de cette dernière partie est spécifiquement adapté pour générer le moins possible de chaleur par cisaillement, ce qui accroît la capacité potentielle de refroidissement et donc bénéficie à la productivité. Le design de la section de refroidissement de la vis sera adapté pour arriver à l'entrée de la filière à la température optimale, dont l'homogénéité dans une section droite perpendiculaire à l'écoulement, permet d'obtenir la combinaison avantageuse de densité et taille cellulaire revendiquée.
ii) Échangeur de chaleur "statique": le mélange homogène des composants plastifiés + le gaz quittent le cylindre de l'extrudeuse pour passer à travers un échangeur de chaleur, parcouru d'un fluide caloporteur, dont le concept doit permettre une régulation de la température de mélange au dixième de degré près, ce qui permet d'atteindre avec la progressivité et la précision voulue la température optimale de moussage à la filière. L'échangeur doit en outre être conçu pour aplanir le profil de température dans une section droite perpendiculaire à l'écoulement, afin de rendre le profil de température à la sortie de cet échangeur le plus plat possible. L'adjonction d'un échangeur statique après le cylindre de l'extrudeuse permet en outre d'accroître le débit permissible.

### 1.4. Homogénéisation:

Le mélange refroidi est éventuellement à nouveau homogénéisé, par passage dans un mélangeur statique qui va diviser le flux en plusieurs "canaux" que seront croisés et redistribués, afin de rendre le profil de température d'une section perpendiculaire du flux le plus plat possible.

### 1.5. Relaxation:

On peut éventuellement adjoindre une section de relaxation du flux, en plaçant un tube vide sur une distance adéquate. Ceci permet aux tensions internes dues au cisaillement, ainsi qu'aux effets "mémoire" viscoélastiques de se relâcher et assurer un écoulement plus régulier du flux.

### 1.6. Filière de moussage:

Le mélange homogène en composition et en température, monophasique des composants plastifiés et du gaz va à présent passer dans l'outil de mise en forme, constitué d'une filière guidant le flux vers la forme de moussage voulue. La perte de charge que subit le mélange depuis la sortie du cylindre diminue sans cesse la pression du mélange; à un moment cette pression chute en dessous du seuil critique où le gaz, auparavant solubilisé, va sursaturer le mélange et des bulles de gaz vont alors prendre naissance, formant une deuxième phase discrète. Idéalement, la zone de formation de ces bulles primaires ne doit pas se passer trop tôt, sous peine d'occasionner un prémoussage donnant une mousse déformée et instable, avec une surface peu attractive. Les moyens d'actions sur l'endroit où se produit cette étape critique de démixtion sont multiples: viscosité des composants, température de l'outil, proportion de gaz, forme de l'outil, débit de l'extrudeuse...tous ces paramètres doivent être optimisés pour chaque profil de mousse à réaliser.

### 1.7. Mise en forme:

La mousse sort à l'atmosphère, à haute température, et s'expanse librement. La viscosité des parois cellulaires augmente avec le refroidissement et la migration du gaz dans les cellules, jusqu'à figer la structure cellulaire. Mais ce processus prend du temps, et la forme de la mousse n'est pas stable immédiatement. Pour contrôler les dimensions de la mousse, on la fait passer à travers un système de calibrage, par un tirage motorisé en fin de la ligne d'extrusion. Les calibreurs, éventuellement contrôlés en température pour un contrôle plus efficace de la forme surtout au début lorsque la mousse est la plus chaude, imposent progressivement à la masse moussée sa forme définitive.

### 1.8. Coextrusion en ligne (optionnel):

Il est possible de modifier une partie ou toute la surface du profilé de mousse primaire solidifié en lui adjoignant une couche supplémentaire de matière par coextrusion. Cette couche secondaire, qui doit être compatible avec la première pour assurer une bonne cohésion, peut avoir pour fonction un renforcement des propriétés mécaniques, un effet décoratif, ... La couche secondaire peut être compacte ou bien moussée.

### 1.9. Ornementation en ligne (optionnel):

Il est possible d'imprimer des motifs décoratifs sur une portion choisie du profilé, par exemple via un rouleau chauffant pressé contre la mousse préalablement réchauffée localement, ou par un système de presse avançant avec le profil, ou tout autre procédé connu de l'homme de l'Art.

### 1.10. Tirage et coupe:

La mousse est donc tirée par une étireuse motorisée, simple ou double suivant le nombre de profilés extrudés en parallèle. Le profilé est alors coupé à longueur par une scie, assurant une coupe bien perpendiculaire.

### 1.11. Ornementation hors ligne (optionnel):

Il est possible d'imprimer des motifs décoratifs sur une portion choisie du profilé découpé, par exemple via un rouleau chauffant pressé contre la mousse préalablement réchauffée localement, ou par un système de presse avançant avec le profil, ou tout autre procédé connu de l'homme de l'Art.

### 2. Matières premières:

### 2.1. polymères:

Le polystyrène est utilisé comme résine de base. La viscosité du polystyrène sera adaptée en fonction du profil de mousse, la pression nécessaire à l'obtention d'une bonne qualité, le débit d'extrusion souhaitable. Plusieurs sortes de polystyrènes, différant en viscosité et donc en masse moléculaire, ayant des indices d'écoulement ("Melt Flow Rate" MFR), selon ASTM D1238, mesuré à 200°C et charge de 5.0 kg de 1 à 25 g/10minutes, peuvent être utilisées seuls ou en mélange. On peut aussi ajouter des copolymères de styrène et d'un monomère diène, possédant une meilleure résistance à l'impact et une meilleure élasticité. Par exemple: Acrylonitrile-Butadiène-styrène (ABS), Styrène-Butadiène-Styrène (SBS), Styrène-Ethylène-Butadiène-Styrène (SEBS), ayant également des indices d'écoulement ("Melt Flow Rate" MFR) variables, adaptés selon la mousse à obtenir.

On peut également ajouter de la matière recyclée, compatible avec l'ensemble des composants, par exemple des déchets de profils moussés préalablement broyés, dégazés et densifiés.

Dans le cas d'une couche coextrudée sur la mousse de base, les matériaux seront choisis selon qu'ils sont capables de former une liaison cohésive suffisante avec la mousse de base. Il peut s'agir de thermoplastiques, de thermodurcissables.

### 2.2. Gaz:

Le gaz utilisé est de préférence du CO₂. Stocké dans un réservoir sous pression et température telles qu'il se trouve à l'état liquide. Il ne faut en aucun cas dépasser 31.1°C, au-delà le CO₂ devient supercritique et a donc une densité nettement plus faible que le liquide, ce qui rend son pompage délicat. Le CO₂ est pompé dans des conduites refroidies bien en dessous de la température critique, afin de maintenir l'état liquide, jusqu'au dispositif de régulation du débit d'injection. Il s'agit d'un débitmètre fonctionnant selon l'effet Coriolis, qui permet de relier la masse du gaz dosée par unité de temps à une différence de vitesse de vibration induite par le passage du fluide dans une conduite en vibration. Ce débitmètre ne fonctionnant que pour des liquides, il est donc primordial que le CO₂ reste dans cet état. Le CO₂ liquide est alors amené dans le cylindre de l'extrudeuse via un pore d'injection, muni d'une vanne antiretour.

### 2.3. additifs:

### a. agent nucléant:

Les cellules de la mousse sont régularisées grâce à l'emploi d'un composé qui va favoriser une répartition homogène des cellules dans la mousse. Il peut s'agir de produits passifs, ne réagissant pas chimiquement, tels le talc, le carbonate de calcium, la silice, ...On peut employer également des produits dits "actifs" qui vont se décomposer sous l'action de la chaleur, en dégageant une phase gazeuse. La réaction favorise la nucléation homogène, la présence de domaines de gaz finement divisé également. Les combinaisons d'acide citrique et de bicarbonate de sodium, l'azodicarbonamide, l'OBSH,... sont bien connus.

### b. Additifs d'aide au process:

Il s'agit de composés facilitant l'extrusion du mélange de polystyrène, par un effet de lubrification interne ou externe. Il s'agit généralement d'une molécule ayant un bas poids moléculaire. Parmi les produits connus, citons les esters de C4-C20 monoalcools, les amides d'acide gras, les cires de polyéthylène, les cires de polyéthylène oxydé, les cires styrèniques, les alcools C1-C4, les composés siliconés etc. Ces composés peuvent être soit ajoutés au mélange dès l'entrée de l'extrudeuse, sous forme de mélange maître à base de polystyrène, soit injectés sous forme liquide dans l'extrudeuse, soit encore injecté avec régularité et précision à l'endroit adéquat de l'outil d'extrusion via un anneau répartiteur, afin de tapisser exclusivement et régulièrement le canal d'écoulement de la filière pour constituer un film ayant un coefficient de friction très bas.

### c. Pigments:

On peut colorer uniformément la masse de mousse par l'utilisation de pigments ajoutés à l'alimentation de l'extrudeuse. Il est également possible d'obtenir un "effet bois" en utilisant des associations de pigments de couleurs ayant des viscosités très différentes, par exemple combiner un mélange maître de couleur claire sur base d'un polymère à haute viscosité avec mélange maître de couleur foncée sur base d'un polymère à basse viscosité.

### d. Autres additifs:

Citons encore, de manière non exhaustive:
- Antifeu (halogénés [chlorés, brômés, fluorés,...] ou non [hydroxydes, phosphates, graphite expansible,...];
- AntiUV;
- Antioxydants;
- Charges minérales diverses;
- Fibres de renfort (verre, cellulose,...)
- Additifs agissant sur la viscosité à l'état fondu (copolymères acryliques haut poids moléculaire)

### 3. Exemples de réalisations:

Les exemples qui suivent illustrent les conditions d'obtention et les aspects morphologiques des mousses représentatives de l'invention. On a regroupé en un tableau les paramètres clés d'extrusion, dimension des profils et quantité de chaleur extraite lors du refroidissement.

Le polymère utilisé est un polystyrène crystal, MFI = 15. Un agent nucléant, du type acide citrique + bicarbonate de sodium a été ajouté pour réguler la taille des cellules. Le gaz de moussage est 100% CO₂.

Lorsqu'un échangeur de chaleur est utilisé (exemples N°1 à 5), on calcule la quantité de chaleur extraite pour arriver à la température optimale en filière. En l'absence d'échangeur (exemple N°6), n'ayant pas accès à la température de la masse dans le cylindre avant la section de refroidissement, il n'est pas possible d'évaluer cette quantité de chaleur. Néanmoins, on renseigne la température optimale d'extrusion.

| **Exemple N°** | | **1** | **2** | **3** | **4** | **5** | **6** |
|---|---|---|---|---|---|---|---|
| **dimensions L x I** | mmxmm | **120*15** | **40*20** | **38*16** | **150*17** | **19*12** | **40*20** |
| **Volume / mètre courant** | dm³/m | **1.26** | **0.42** | **0.39** | **2.23** | **0.2** | **0.42** |
| **densité** | kg/m³ | **344** | **311** | **295** | **343,6** | **308,2** | **297** |
| **échangeur?** | | **OUI** | **OUI** | **OUI** | **OUI** | **OUI** | **NON** |
| débit massique PS | kg PS/h | **120** | **90** | **80** | **130** | **50** | **80** |
| débit massique CO₂ | g CO₂/min | 4,8 | 4,6 | 4,1 | 5 | 2,9 | 4,3 |
| concentration en CO₂ | % en poids | 0,2 | 0,3 | 0,3 | 0.2 | 0,4 | 0,3 |
| T° entrée échangeur | °C | 192 | 189 | 188 | 193 | 184 | - |
| T° filière | °C | 154,8 | 157,4 | 163,5 | 156,9 | 161,6 | 159,5 |
| DELTA T° | | **37,2** | **31,6** | **24,5** | **36,1** | **22,4** | **-** |
| **Puissance de refroidissement** | **kJ/h** | **8225,87** | **5242,82** | **3613,21** | **8647,36** | **2065,20** | **-** |

On constate que les quantités de chaleur sont logiques en fonction des densités, dimensions et débits d'extrusion. Les exemples 2 et 3 illustrent cependant que les températures optimales d'extrusion à la filière sont aussi fonction de la complexité des formes: malgré leur volumes similaires, la forme de l'exemple 3 est beaucoup plus tortueuse que celle de l'exemple 2, accroissant les frottements, mais le procédé est dans chaque cas suffisamment adaptatif et flexible pour permettre d'obtenir des mousses ayant une structure de cellules régulière et fine.

## Revendications

1. Procédé de fabrication de profilés pleins, creux ou ouverts, en particulier ceux comportant des arêtes vives à base de polystyrène comportant les étapes suivantes :
• Dosage de polymères comprenant du polystyrène et optionnellement d'autres additifs et adjuvants
• Plastification des composantes dans une extrudeuse afin d'obtenir un mélange homogène,
• Injection d'un gaz sous pression via un port d'injection,
• Malaxage et mise sous pression dudit mélange homogène et du gaz jusqu'à une dissolution complète du gaz pour obtenir un mélange en une seule phase,
• Refroidissement progressif dudit mélange en une seule phase afin de maintenir la pression nécessaire à la solubilisation du gaz jusqu'à une température supérieure à 135 °C,
• Passage dudit mélange en une seule phase mélange dans un outil de mise en forme afin de former une mousse,
• Passage de la mousse ainsi formée à travers un système de calibrage optionnellement contrôlé en température,
• Tirage motorisé de la mousse calibrée, **caractérise en ce que** la concentration du gaz est de 0.2 à 0.4 % en poids par rapport aux polymères comprenant du polystyrène.

2. Procédé selon la revendication 1, **caractérisé en ce que** le refroidissement progressif jusqu'à la température de moussage est régulé de manière à assurer un profil de température homogène dans une section droite perpendiculaire à l'écoulement.

3. Procédé selon la revendication 1 ou 2, **caractérisé en ce que** le polymère mis en oeuvre est choisi dans le groupe constitué de polystyrène, d'acrylonitrile-butadiène-styrène, de styrène-butadiène-styrène, de styrène-ethylène-butadiène-styrène ou de leurs mélanges

4. Procédé selon la revendication 1, 2 ou 3, **caractérisé en ce que** l'on utilise plusieurs sortes de polystyrènes, différant en viscosité, seuls ou en mélange avec des copolymères de styrène et d'un monomère diène.

5. Procédé selon la revendication 4, **caractérisé en ce que** les copolymères sont choisis dans le groupe constitué d'acrylonitrile-butadiène-styrène, de styrène-butadiène-styrène, de styrène-ethylène-butadiène-styrène ou de leurs mélanges.

6. Procédé selon l'une quelconque des revendications précédentes, **caractérisé en ce que** une partie ou toute la surface du profilé de mousse solidifiée est modifié en lui adjoignant une couche supplémentaire de matière par coextrusion.

7. Procédé selon la revendication 6, **caractérisé en ce que** la matière coextrudée est à l'état moussée ou compacte.

8. Procédé selon l'une quelconque des revendications précédentes, **caractérisé en ce que** le gaz de moussage utilisé est le CO₂

9. Procédé selon l'une quelconque des revendications précédentes, **caractérisé en ce que** l'on ajoute des composés facilitant l'extrusion du mélange de polystyrène choisi dans le groupe constitué des esters de C4-C20 mono-alcools, des amides d'acide gras, des cires de polyéthylène, des cires de polyéthylène oxydé, des cires styrèniques, des alcools C1-C4, des composés siliconés et de leurs mélanges.

10. Procédé selon la revendication 9, **caractérisé en ce** les composés facilitant l'extrusion du mélange de polystyrène sont injectés avec régularité et précision à l'endroit adéquat de l'outil d'extrusion via un anneau répartiteur, afin de tapisser exclusivement et régulièrement le canal d'écoulement de la filière.

## Claims

1. A method for producing solid, hollow or open profiles, in particular those including sharp edges, based on polystyrene, including the following steps:
• dosing polymers comprising polystyrene and optionally other additives and adjuvants
• plasticizing the components in an extruder in order to obtain a homogenous mixture,
• injecting a pressurized gas via an injection port,
• kneading and pressurizing said homogeneous mixture and gas until complete dissolution of the gas in order to obtain a mixture in a single phase,
• gradually cooling said mixture while maintaining the pressure required for solubilizing the gas, up to a temperature above 135°C,
• having said mixture pass as a single phase mixture, into a shaping tool in order to form a foam,
• having the thereby formed foam pass through an optionally temperature-controlled calibration system,
• drawing the calibrated foam with a motor,
**characterized in that** the concentration of the gas is 0.2 to 0.4% by weight based on the polymers comprising polystyrene.

2. The method according to claim 1, **characterized in that** the gradual cooling to the foaming temperature is controlled so as to provide a homogeneous temperature profile in a cross-section perpendicular to the flow.

3. The method according to claim 1 or 2, **characterized in that** the applied polymer is selected from the group consisting of polystyrene, acrylonitrile-butadiene-styrene, styrene-butadiene-styrene, styrene-ethylene-butadiene-styrene or mixtures thereof.

4. The method according to claim 1, 2 or 3, **characterized in that** several kinds of polystyrenes which differ in viscosity, are used either alone or mixed with copolymers of styrene and a diene monomer.

5. The method according to claim 4, **characterized in that** the copolymers are selected from the group consisting of acrylonitrile-butadiene-styrene, styrene-butadiene-styrene, styrene-ethylene-butadiene-styrene or mixtures thereof.

6. The method according to any of the preceding claims, **characterized in that** a portion or the whole of the surface of the solidified foam profile is altered by adding by co-extrusion an additional layer of material thereto.

7. The method according to claim 6, **characterized in that** the co-extruded material is in the foamed or compact state.

8. The method according to any of the preceding claims, **characterized in that** the foaming gas used is CO₂.

9. The method according to any of the preceding claims, **characterized in that** compounds facilitating extrusion of the polystyrene mixture, selected from the group consisting of esters of C4-C20 mono-alcohols, fatty acid amides, polyethylene waxes, oxidized polyethylene waxes, styrene waxes, C1-C4 alcohols, siliconized compounds and mixtures thereof, are added.

10. The method according to claim 9, **characterized in that** the compounds facilitating extrusion of the polystyrene mixture are injected with regularity and accuracy at the suitable location of the extrusion tool via a distributor ring, in order to exclusively and regularly line the flow channel of the die.

## Patentansprüche

1. Verfahren zur Herstellung voller, hohler oder offener Profile, insbesondere solcher mit scharfen Kanten auf der Basis von Polystyrol, mit folgenden Verfahrensschritten:
• Dosieren von Polymeren, welche Polystyrol und optional weitere Additive und Hilfsmittel enthalten,
• Plastifizieren der Komponenten in einem Extruder zur Herstellung eines homogenen Gemisches,
• Einblasen eines druckbeaufschlagten Gases über einen Gaseinblasanschluss,
• Mischen und Druckbeaufschlagen des homogenen Gemisches und des Gases bis zur vollständigen Auflösung des Gases zur Herstellung eines einphasigen Gemisches,
• progressives Abkühlen des einphasigen Gemisches zwecks Halten des zur Solubilisierung des Gases notwendigen Druckes bis auf eine Temperatur oberhalb 135 °C,
• Überführen des einphasigen Gemisches in ein Formgebungswerkzeug zur Herstellung eines Schaumstoffs,
• Durchleiten des so hergestellten Schaumstoffs durch eine Kalibriereinrichtung, welche optional temperaturkontrolliert ist,
• motorisiertes Ziehen des kalibrierten Schaumstoffs,
**dadurch gekennzeichnet, dass** die Konzentration des Gases 0,2 bis 0,4 Gew.-% in Bezug auf die polystyrolhaltigen Polymere beträgt.

2. Verfahren nach Anspruch 1, **dadurch gekennzeichnet, dass** das progressive Abkühlen bis auf die Schäumungstemperatur so geregelt wird, dass in einem Querschnitt senkrecht zur Fließbewegung ein homogenes Temperaturprofil sichergestellt ist.

3. Verfahren nach Anspruch 1 oder 2, **dadurch gekennzeichnet, dass** das verarbeitete Polymer aus der Gruppe bestehend aus Polystyrol, Acrylnitrilbutadienstyrol, Styrolbutadienstyrol, Styrolethylenbutadienstyrol oder ihren Gemischen gewählt wird.

4. Verfahren nach Anspruch 1, 2 oder 3, **dadurch gekennzeichnet, dass** mehrere Polystyrolarten unterschiedlicher Viskosität einzeln oder gemischt mit Copolymerisaten von Styrol und einem Dienmonomer eingesetzt werden.

5. Verfahren nach Anspruch 4, **dadurch gekennzeichnet, dass** die Copolymere aus der Gruppe bestehend aus Acrylnitrilbutadienstyrol, Styrolbutadienstyrol, Styrolethylenbutadienstyrol oder ihren Gemischen gewählt werden.

6. Verfahren nach irgendeinem der vorhergehenden Ansprüche, **dadurch gekennzeichnet, dass** die ganze oder ein Teil der Oberfläche des erstarrten Schaumprofils modifiziert wird, indem sie durch Coextrudieren mit einer zusätzlichen Materialschicht versehen wird.

7. Verfahren nach Anspruch 6, **dadurch gekennzeichnet, dass** das coextrudierte Material in geschäumter oder kompakter Form vorliegt.

8. Verfahren nach irgendeinem der vorhergehenden Ansprüche, **dadurch gekennzeichnet, dass** es sich bei dem verwendeten Schaumgas um CO₂ handelt.

9. Verfahren nach irgendeinem der vorhergehenden Ansprüche, **dadurch gekennzeichnet, dass** Verbindungen zugegeben werden, welche die Extrusion des Polystyrolgemisches erleichtern und aus der Gruppe bestehend aus den einwertigen C4-C20-Alkoholestern, den Fettsäureamiden, den Polyethylenwachsen, den oxidierten Polyethylenwachsen, den styrolischen Wachsen, den C1-C4-Alkoholen, den Siliconwachsen und ihren Gemischen gewählt werden.

10. Verfahren nach Anspruch 9, **dadurch gekennzeichnet, dass** die die Extrusion des Polystyrolgemisches erleichternden Verbindungen gleichmäßig und präzise an der geeigneten Stelle des Extrusionswerkzeuges über einen Verteilerring zur ausschließlichen und gleichmäßigen Auskleidung des Düsenabflusskanals injiziert werden.
